# FASCICULE DE BREVET EUROPEEN

(11) **EP 0 801 528 B1**
(45) Date de publication et mention de la délivrance du brevet: **12.04.2000**
(21) Numéro de dépôt: 96901021.4
(22) Date de dépôt: 04.01.1996
(51) Int. Cl.: A01N 57/20

(54) **PROCEDE ET COMPOSITION A BASE D'ETHEPHON POUR LA REGULATION DE LA CROISSANCE DES VEGETAUX**
VERFAHREN UND ZUSAMMENSETZUNG AUF BASIS VON ETHEPON ZUR REGULIERUNG DES PFLANZENWACHSTUMS
METHOD AND ETHEPHON-BASED COMPOSITION FOR CONTROLLING PLANT GROWTH

(30) Priorité: 06.01.1995 FR 9500125
(43) Date de publication de la demande: 22.10.1997
(73) Titulaire: Rhone Poulenc Agro, 69009 Lyon (FR)
(72) Inventeur: SCHAPIRA, Joseph, F-75015 Paris (FR); VINCENT, Jacques, F-78750 Mareil-Marly (FR); SCHILD, Jacques, F-92230 Gennevilliers (FR); MAILLET, Isabelle, F-75012 Paris (FR)
(74) Mandataire: Koch, Gustave
(86) Numéro de dépôt international: FR9600018
(87) Numéro de publication internationale: WO9620603

(56) Documents cités:
- DD-A- 139 063
- DD-A- 237 253
- FR-A- 2 118 698
- GB-A- 1 505 331
- MARK H.F. ET AL. 'Kirk-Othmer Encyclopedia of Chemical Technology, third edition' 1979 , WILEY & SONS , NEW YORK. volume 5 voir page 344 - page 345; tableau 1

## Description

L'invention a pour objet un procédé pour la régulation de la croissance des végétaux, ce procédé mettant en oeuvre de l'éthéphon.

Elle vise également une composition à base d'éthéphon pour la régulation de la croissance des végétaux.

On rappelle que l'éthéphon, ou acide 2-chloroéthyl-phosphonique, est un régulateur de croissance des végétaux qui se présente sous la forme d'un solide gris, acide, fondant vers 74-75°C; sa grande solubilité dans l'eau permet de le manipuler plus commodément, sans l'isoler, sous forme de solution concentrée à environ 1000 g/l.

On suppose que son activité biologique est liée à l'émission d'éthylène, à l'extérieur et/ou à l'intérieur des plantes et probablement au déclenchement d'une émission endogène d'éthylène dans la plante par effet de cascade. En tant que régulateur de croissance, il peut être utilisé pour provoquer le mûrissement des fruits et légumes, réduire la longueur des tiges et des pailles des céréales, favoriser le bourgeonnement axillaire ou apical de certaines fleurs et augmenter la production de latex lors de la saignée de l'hévéa.

L'éthéphon favorise aussi l'ouverture anticipée et uniforme des capsules mûres du coton et provoque la sénescence des feuilles, voire leur chute suivant les conditions du milieu, ce qui facilite la récolte.

Par le document GB-A-1 505 331, on connaît déjà des compositions comportant d'une part un composé fournissant de l'éthylène et d'autre part un agent chélatant.

Par ailleurs, les documents antérieurs DD-A-237 253 et DD-A-139 063 décrivent des compositions comportant de l'éthéphon et un composé constitué par une chaîne hydrocarbonée à un atome de carbone, bisubstituée par deux fonctions acide phosphonique.

Dans le cadre de ses recherches menées en vue de tirer un meilleur parti des propriétés biologiques de l'éthéphon, autrement dit en vue d'obtenir des effets biologiques plus rapides ou plus intenses pour une quantité de matière active donnée, la Société Demanderesse a eu le mérite de trouver que ce but pouvait être atteint de façon tout à fait inattendue et surprenante dès lors que l'éthéphon était mis en oeuvre de façon concomitante à au moins l'une des substances d'un groupe de produits connus jusqu'alors pour des propriétés se manifestant dans des domaines techniques aussi éloignés de l'agriculture que la fluidification des ciments, le traitement d'adoucissage ou de détergence de textiles, la formation de chélates avec des métaux multivalents ou encore le traitement des eaux de chaudière, la structure chimique de ces produits qui peuvent commodément être désignés par le terme "adjuvants" étant caractérisée par la présence d'au moins deux fonctions acides choisies dans le groupe comprenant les fonctions acides du type carboxylique de formule (-COOH) et celles du type phosphonique (-PO₃H₂), l'une au moins de ces fonctions acides étant la fonction (-PO₃H₂), ces fonctions acides étant reliées par des chaînes carbonées, éventuellement substituées, définies ci-après.

Il s'ensuit que le procédé de régulation de la croissance des végétaux conforme à l'invention est caractérisé par le fait que l'on met en oeuvre sur les végétaux à traiter de l'éthéphon et au moins un produit dont la structure chimique est caractérisée par le fait qu'elle comprend au moins deux fonctions acides choisies dans le groupe comprenant les fonctions acides du type carboxylique de formule (-COOH) et celles du type phosphonique (-PO₃H₂), l'une au moins de ces fonctions acides étant la fonction (-PO₃H₂), ledit produit étant choisi dans le groupe comprenant
- celui de formule 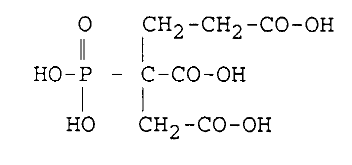
- et ceux dans lesquels les fonctions acides sont reliées
   - par une chaîne organique du type (-R-O-R) comportant une fonction éther et dans laquelle R est défini comme ci-dessus, les deux chaînes R pouvant être identiques ou différentes l'une de l'autre,
   - et/ou par une chaîne organique du type (-R-NH-R-) comportant une fonction amine secondaire et dans laquelle R est défini comme ci-dessus, les deux chaînes R pouvant être identiques ou différentes l'une de l'autre,
   - et/ou par une chaîne organique du type 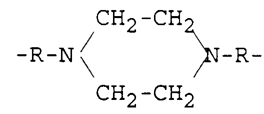 comportant deux fonctions amine tertiaire et dans laquelle R est défini comme ci-dessus, les deux chaînes R pouvant être identiques ou différentes l'une de l'autre,
   - et/ou par une chaîne du type 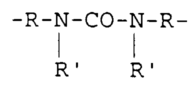 dans laquelle (-R') représente l'hydrogène ou la susdite chaîne R,
   - et/ou par une chaîne organique du type 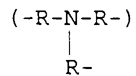
comportant une fonction amine tertiaire et dans laquelle R est défini comme ci-dessus, les trois chaînes R pouvant être identiques ou différentes l'une de l'autre.

La composition conforme à l'invention à base d'éthéphon pour la régulation de la croissance des végétaux est caractérisée par le fait qu'elle comprend, outre l'éthéphon et, s'il y a lieu, les constituants habituels des compositions à base d'éthéphon, au moins un produit ou adjuvant dont la structure chimique comprend au moins deux fonctions acides choisies dans le groupe comprenant les fonctions acides du type carboxylique de formule (-COOH) et celles du type phosphonique (-PO₃H₂), l'une au moins de ces fonctions acides étant la fonction (-PO₃H₂), ledit produit étant choisi dans le groupe comprenant
- celui de formule 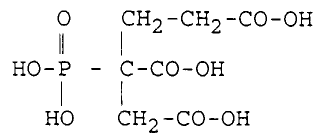
- et ceux dans lesquels les fonctions acides sont reliées
   - par une chaîne organique du type (-R-O-R) comportant une fonction éther et dans laquelle R est défini comme ci-dessus, les deux chaînes R pouvant être identiques ou différentes l'une de l'autre,
   - et/ou par une chaîne organique du type (-R-NH-R-) comportant une fonction amine secondaire et dans laquelle R est défini comme ci-dessus, les deux chaînes R pouvant être identiques ou différentes l'une de l'autre,
   - et/ou par une chaîne organique du type 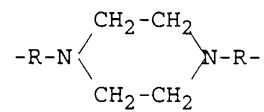 comportant deux fonctions amine tertiaire et dans laquelle R est défini comme ci-dessus, les deux chaînes R pouvant être identiques ou différentes l'une de l'autre,
   - et/ou par une chaîne du type 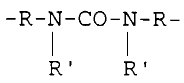 dans laquelle (-R') représente l'hydrogène ou la susdite chaîne R,
   - et/ou par une chaîne organique du type 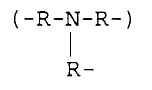
comportant une fonction amine tertiaire et dans laquelle R est défini comme ci-dessus, les trois chaînes R pouvant être identiques ou différentes l'une de l'autre.

Suivant un mode de réalisation avantageux des procédé et composition conformes à l'invention, le produit ou adjuvant est caractérisé par le fait que sa structure chimique, qui comprend au moins deux fonctions acides, est représentée par l'une des formules générales indiquées ci-après: 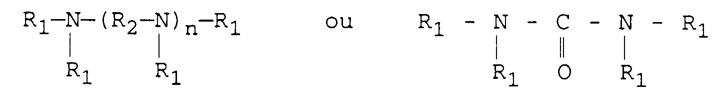 ou 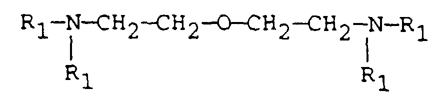 dans lesquelles
- n représente un nombre entier de 0 à 4,
- R₂ représente un groupe hydrocarboné linéaire ou ramifié ayant de 2 à 6 atomes de carbone,
- R₁ représente, indépendamment à chaque occurrence, un atome d'hydrogène, une chaîne alcoyle ayant de 1 à 4 atomes de carbone, un groupe phényle, un groupe hydroxyphényle, un groupe hydroxy-alcoyle, un groupe acide alcoylène-phosphonique ou un des cinq groupes représentés ci-après:

   -CH₂-CH₂-NH-PO₃H₂

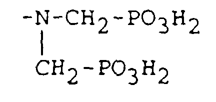

   -CH₂-COOH

   (le nombre de groupes -CH₂-COOH étant d'au plus trois)

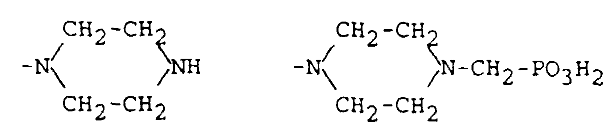

Suivant un autre mode de réalisation avantageux des procédé et composition conformes à l'invention, le produit ou adjuvant est caractérisé par le fait que sa structure chimique, qui comprend au moins deux fonctions acides, est représentée par la formule 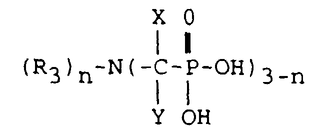 dans laquelle
- n représente un nombre entier égal à 0 ou 1,
- X et Y représentent un atome d'hydrogène ou un reste alcoyle ayant de 1 à 6 atomes de carbone,
- R₃ représente un atome d'hydrogène, un groupe hydrocarboné aliphatique, un groupe hydrocarboné aliphatique halo-substitué, un groupe hydrocarboné aliphatique hydroxy-substitué, le groupement -CH₂COOH ou le groupe 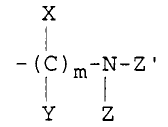 dans laquelle
- m représente un nombre entier de 1 à 6,
- X et Y représentent un atome d'hydrogène ou un reste alcoyle,
- Z représente un atome d'hydrogène ou le groupe 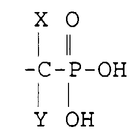
- Z' représente Z ou le groupe de formule 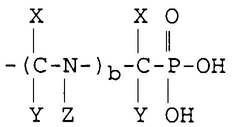
dans laquelle b est un nombre entier de 1 à 6.

Suivant un autre mode de réalisation avantageux des procédé et composition conformes à l'invention, le produit ou adjuvant est caractérisé par le fait que sa structure chimique, qui comprend au moins deux fonctions acides, est représentée par la formule 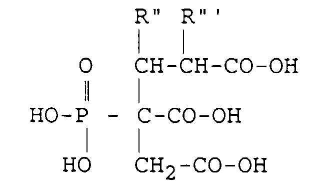 dans laquelle
- R" représente l'hydrogène ou une chaîne alkyle courte ayant de 1 à 4 atomes de carbone et
- R"' représente l'hydrogène ou un groupe méthyle, les produits répondant aux formules 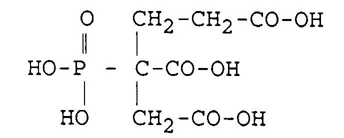 ainsi que 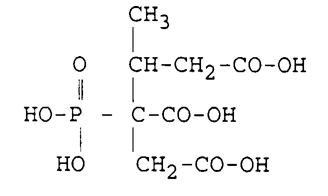 et 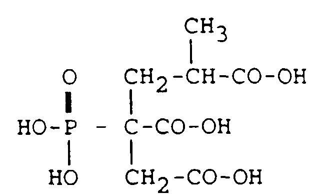 étant plus particulièrement préférés.

Suivant un autre mode de réalisation avantageux des procédé et composition conformes à l'invention, le produit ou adjuvant est caractérisé par le fait que sa structure chimique, qui comprend au moins deux fonctions acides, est soit représentée par la formule 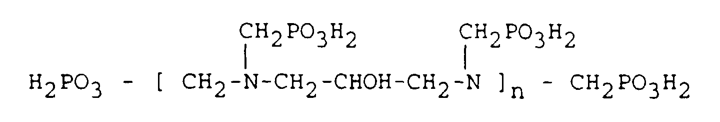 dans laquelle n est un nombre entier de 1 à 5,
soit par les produits suivants:
- l'acide 1,6-hexylènediamine-N,N,N',N'-tétrakis((méthylène)phosphonique),
- l'acide éthèylènediamine-N,N,N',N'-tétrakis((méthylène)phosphonique),
- l'acide diéthylènetriamine-N,N,N',N",N"-penta((méthylène)phosphonique),
- l'acide nitrilo-N,N,N-tris((méthylène)phosphonique) qui sont particulièrement préférés.

Suivant un autre mode de réalisation avantageux des procédé et composition conformes à l'invention, le produit ou adjuvant est caractérisé par le fait que sa structure chimique, qui comprend au moins deux fonctions acides, est représentée par l'une des formules 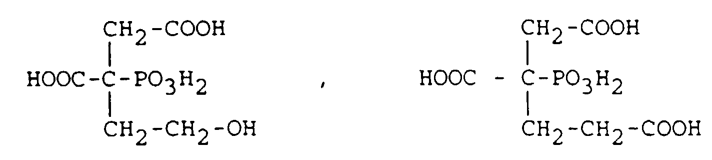 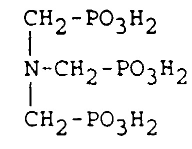 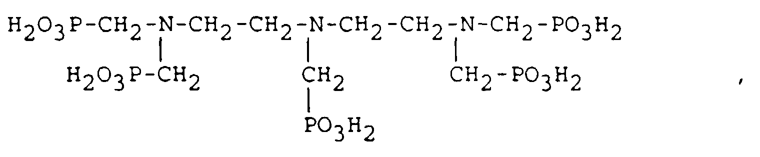 et

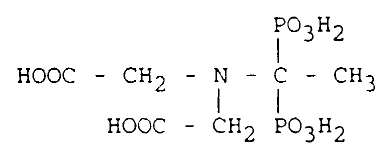

D'un point de vue plus général, les produits ou adjuvants mis en oeuvre de façon concomitante avec l'éthéphon et identifiés ci-dessus sont avantageusement utilisés sous forme de sels alcalins et/ou alcalino-terreux et/ou d'amines ayant de 2 à environ 18 atomes de carbone, ces amines étant éventuellement oxyéthylénées et/ou oxypropylénées, sous réserve que le pH de la composition finale --s'il s'agit d'une solution aqueuse ou hydroalcoolique-- ne dépasse pas 3.

Dans la composition conforme à l'invention, le rapport pondéral éthéphon/adjuvant est de 10/1 à 1/10, de préférence de 5/1 à 1/5.

La composition peut se présenter sous la forme d'une solution aqueuse comprenant un ou plusieurs agents mouillants choisis parmi les alcools en C₄ à C₁₈ et/ou les alkylphénols oxyéthylénés et/ou oxypropylénés dont la fonction alcool en bout de chaîne est éventuellement substituée par un groupe oxyacétique ou un atome de chlore, les alkylglucosides, les acides alcanesulfoniques et/ou alkylarylsulfoniques, ces derniers pouvant être partiellement ou totalement neutralisés sous forme de sels alcalins et/ou alcalino-terreux et/ou d'amines ayant de 2 à environ 18 atomes de carbone, ces amines étant éventuellement oxyéthylénées et/ou oxypropylénées, sous réserve que le pH de la composition ne dépasse pas 3.

Elle peut également se présenter sous la forme de poudre comprenant un ou plusieurs agents mouillants choisis parmi ceux identifiés ci-dessus et un support absorbant soluble dans l'eau tel que la dextrine ou malto-dextrine, ou insoluble dans l'eau tel que la silice micronisée, étant entendu que, dans ce dernier cas, on peut avoir recours à des dispersants tels que les lignosulfonates ou les polynaphtylméthane-polysulfonates.

Elle peut enfin se présenter sous forme de granulés épandables comprenant un ou plusieurs agents mouillants choisis parmi ceux identifiés ci-dessus et un support absorbant ou bien soluble dans l'eau et tel que la dextrine ou malto-dextrine calibrée, ou bien insoluble dans l'eau et tel que les silicates calibrés, notamment la Sépiolite®.

Les compositions conformes à l'invention peuvent être appliquées sur les plantes de différentes façons selon leur mode de présentation.

Lorsque ces compositions sont par exemple des solutions aqueuses, des poudres solubles, des poudres mouillables ou des concentrés émulsionnables, des granulés dispersibles ou solubles, on prépare la bouillie --terme désignant la dilution prête à être pulvérisée sur les végétaux à traiter-- en diluant simplement la composition dans une partie de l'eau prévue pour le traitement, puis en complétant sous agitation avec de l'eau jusqu'au volume souhaité.

Lorsque ces compositions sont sous forme de granulés épandables, de poudre à talquer ou de comprimés, on épand directement la composition sur le sol ou bien on la place directement au contact de la plante à traiter, par exemple dans le cornet de l'ananas pour agir sur sa floraison.

Selon un mode de réalisation avantageux du procédé conforme à l'invention, on applique à l'hectare, selon la culture, le stade physiologique et l'effet recherché, de 20 g à 3000 g d'éthéphon associé avec 20 à 5000 g d'un ou plusieurs des produits ou adjuvants identifiés ci-dessus, l'ensemble constitué par l'éthéphon et l'adjuvant pouvant être dilué dans l'eau à raison de 20 à 3000 litres d'eau par hectare.

L'éthéphon peut s'appliquer plante par plante et les doses sont très faibles par plante (hévéas, ananas...) ou en bouillie. Dans ce dernier cas, selon les modes d'application, on peut pulvériser de 20 à 3000 litres d'eau par hectare contenant de 20 à 3000 g d'éthéphon et de 20 à 5000 g d'adjuvant.

Les produits ou adjuvants identifiés plus haut et mis en oeuvre dans le procédé ou la composition conforme à l'invention, sont des produits en eux-mêmes connus mais dans des applications extrêmement éloignées de celle visée par la présente invention.

Ainsi,
- certains de ces produits sont ceux décrits dans le brevet US-A-4 676 832 à titre de substances permettant de maintenir fluides des gâchées de ciment, c'est-à-dire pompables plus longtemps, ces produits étant constitués par des dérivés de l'acide méthylènephosphonique;
- certains autres sont ceux décrits dans le brevet France FR-A-1 342 412 à titre d'agents d'hydrofugation et d'adoucissage textile lorsqu'ils ont des poids moléculaires élevés, et comme générateurs de complexes susceptibles de former des composés chélatés avec des cations métalliques multivalents lorsqu'ils ont des poids moléculaires moins élevés, les produits en question étant des dérivés des acides mono-, di- et trialkylènephosphoniques;
- certains autres sont ceux décrits dans le brevet France FR-A-1 371 139 à titre de substances visant à séquestrer les ions métalliques de solutions aqueuses ou à en limiter la précipitation; ces séquestrants visent à améliorer les savons, shampooings, détergents pour textile ou pour métaux, ainsi que la polymérisation du caoutchouc et des matières plastiques et sont des dérivés de l'acide amino-tris-alkylidène-phosphonique;
- certains autres sont ceux décrits dans le brevet France FR-A-1 376 001 à titre de défloculants ou dispersants pour améliorer la rhéologie des systèmes dispersés, l'efficacité étant mesurée par exemple par des mesures de viscosité de pâtes aqueuses de kaolin, les produits en question étant des sels d'acides alcoylaminopolyalcoylènephosphoniques et d'acides alcoyl-polyalcoylèneamine-polyalcoylènephosphoniques;
- certains autres sont ceux décrits dans le brevet France FR-A-1 399 074 à titre de substances utiles comme séquestrants de cations métalliques tels que le fer (Fe 111), comme agents défloculants pour boues de forage dans les puits de pétrole, comme agents fluidifiants pour les dispersions aqueuses de kaolin; ces produits sont des sels d'acides aminotrialcoylènephosphoniques;
- certains autres sont ceux décrits dans le brevet US-A-3 336 221 à titre de substances destinées à lutter contre la formation de tartre, notamment à partir de sels minéraux du type alcalino-terreux, en présence de l'ion carbonate, sous l'effet des variations de pH, de température, de pression ou de l'introduction d'ions additionnels capables de former avec ceux déjà présents des composés insolubles, ce qui gêne les transferts thermiques dans les matériels ainsi entartrés et forme des sites propices au développement des bactéries; ces produits, dotés d'un effet de seuil, c'est-à-dire qui seraient efficaces à des doses sub-stoechiométriques par rapport aux sels de dureté de l'eau présents nettement en dessous du rapport 1:1 (exprimé en mole), sont des sels d'acides aminotrialcoylènephosphoniques, d'acides polyalcoylèneamine-polyalcoylènephosphoniques et d'acides polyhydroxyalcoylèneamine-polyalcoylènephosphoniques;
- certains autres sont ceux décrits dans le brevet US-A-3 368 978 à titre de produits propres à améliorer les performances détergentes de certaines lessives, notamment en blanchisserie, concurremment ou en association avec les tripolyphosphates; il s'agit de dérivés des acides amino-tris-(acide alkylidènephosphonique);
- certains autres sont ceux décrits dans le brevet France FR-A-1 458 566 à titre de produits utiles pour la réalisation de tablettes de lavage, ou d'agents auxiliaires pour le lavage; il s'agit d'acides alcoylènepolyphosphoniques et d'acides polyalcoylèneamine-polyalcoylènephosphoniques;
- certains autres sont ceux décrits dans le brevet US-A-3 434 969 à titre de produits ayant plusieurs groupes amino-méthylènephosphoniques, avec au moins trois sites azotés reliés par des liaisons -CH₂- ("méthylène"), capables d'inhiber la formation du tartre du type carbonates et sulfates d'ions alcalino-terreux dans les solutions aqueuses même à relativement haute température, en manifestant un effet de seuil; ces produits sont des sels d'acides alcoylamino, ou polyalcoylène-polyamine-(polyalcoylènephosphoniques);
- certains autres sont ceux décrits dans les brevets US-A-3 886 204 et US-A-3 886 205 à titre de produits capables de former des complexes avec les ions alcalino-terreux; il s'agit de dérivés de sels d'acides alcoyl-polycarboxyphosphoniques;
- certains autres sont ceux décrits dans le brevet britannique N° 2 157 279 à titre de produits capables de retarder la prise du ciment lors d'injection de ciment hydraulique dans le sol, ou lors du gâchage du plâtre; il s'agit de dérivés de sels d'acides alcoylamino, ou polyalcoylène-polyamine-(polyalcoylènephosphoniques).

Les modes de préparation des produits en question sont décrits dans les brevets antérieurs qui viennent d'être cités.

Comme on peut le constater, les applications connues des produits ou adjuvants en question ne permettent nullement de prévoir l'effet potentialisateur qui se manifeste lorsqu'on les utilise conjointement à l'éthéphon conformément au procédé ou à la composition conformes à l'invention.

Et cet effet est d'autant plus inattendu qu'il se manifeste sous des conditions d'utilisation très différentes, voire antagonistes, de celles dans lesquelles apparaissent les propriétés déjà connues desdits produits.

A cet égard, les bouillies agricoles à base de la composition conforme à l'invention sont appliquées à la température ambiante, alors que les inhibiteurs de tartre fonctionnent essentiellement au cours de changements de température du milieu où ils sont utilisés; en outre, leur activité n'est perceptible qu'aux pH alcalins, ou quand ceux-ci deviennent alcalins (dans le meilleur des cas à pH 4 selon le brevet français FR-A-1 371 139), alors que pour préserver la stabilité de l'éthéphon dans la composition selon la présente invention, le pH est limité à 3,0 au maximum; de même, les ciments et plâtres et les détergents pour textile sont alcalins; par ailleurs, les propriétés dispersantes qui caractérisent certains de ces produits dans les dispersions de kaolin par exemple, n'ont aucune utilité dans le cadre de la présente invention, et ne peuvent expliquer l'action de ces mêmes produits comme "adjuvant" de l'éthéphon puisque les solutions aqueuses finales mises en oeuvre conformément à l'invention sont des solutions homogènes et isotropes.

Les compositions conformes à l'invention peuvent être mises en oeuvre sous toutes les formes compatibles et acceptables pour l'agronomie.

Les solutions aqueuses concentrées sont particulièrement commodes à réaliser compte tenu de la bonne solubilité dans l'eau, en général, des différents constituants, mais on peut aussi réaliser des solutions aqueuses gélifiées pour éviter les éclaboussures pendant les manipulations ou pour obtenir au niveau de la bouillie diluée un effet anti-dérive: on limite ainsi l'entraînement par le vent de produits nébulisés.

On peut y ajouter des antigels, des émollients, des rétenteurs d'humidité, des fixateurs anti-lessivage par la pluie ou la rosée, des mouillants du type non-ionique et/ou anionique, comme par exemple l'éthylèneglycol, le glycérol, les alcools gras et alkylphénols polyoxyalkylénés, les alkylglucosides, ainsi que les alkylsulfonates et alkylarylsulfonates sous forme acide ou sous forme de sels alcalins si le pH de la formule ne dépasse toutefois pas la valeur de 3,0.

En ajoutant à la composition conforme à la présente invention, une huile minérale aliphatique, ou aromatique, des émulgateurs convenablement choisis, et des cosolvants du type butylglycol, propylèneglycol, ou alcools gras courts, on peut réaliser des micro-émulsions.

On peut aussi réaliser des poudres solubles (c'est-à-dire des poudres dans lesquelles les matières actives sont solubles, même si le support est insoluble), en absorbant les solutions aqueuses des différents constituants sur un support absorbant, qui peut être soluble dans l'eau, tel que par exemple une dextrine, ou qui est insoluble tel que par exemple la silice; dans ce dernier cas, on ajoute des agents dispersants et des mouillants connus de l'homme du métier.

La composition conforme à l'invention peut également être présentée sous la forme de granulés épandables en imprégnant soit un support calibré réalisé à partir de la récupération des vieux papiers, par exemple celui commercialisé sous la marque BIODAC®, soit un support constitué par un matériau à base de silicates extraits de gisements et calibré, par exemple celui connu sous l'appellation SEPIOLITE®.

L'invention pourra être encore mieux comprise à l'aide des exemples non limitatifs qui suivent et qui sont relatifs soit à des modes de réalisation avantageux de la composition conforme à l'invention, soit à des essais montrant l'efficacité de l'invention.

### 1. Compositions à base d'éthéphon

On a préparé trois compositions conformes à l'invention; pour ce faire, on dissout dans l'eau les substances solides solubles dans l'eau; il est également possible de mélanger les différentes solutions aqueuses de ces substances de façon à obtenir une solution aqueuse finale ayant les proportions souhaitées.

Les divers constituants sont auparavant pesés avec une précision de ± 0,05 g.

La solution obtenue est transvasée quantitativement dans une fiole de 100 ml tarée, puis complétée à 100 ml et pesée; l'on peut ainsi calculer la densité et la teneur en g/l des constituants actifs.

Les produits ou adjuvants mis en oeuvre dans les trois susdites compositions sont les suivants:
- l'acide 1,2,4-butane-tricarboxylique-2-phosphonique dont la formule est 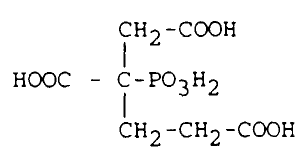 et qui est commercialisé sous la marque BAYHIBIT AM®,
- l'acide aminotriméthylènephosphonique dont la formule est 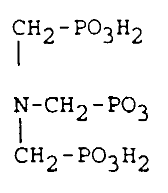 et qui est commercialisé sous la marque DEQUEST 2000®,
- l'acide diéthylènetriamine-pentaméthylènephosphonique dont la formule est 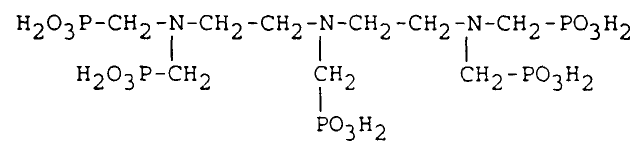 et qui est commercialisé sous la marque DEQUEST 2060®.

Les autres constituants des trois susdites compositions sont
- une solution aqueuse d'éthéphon à 1000 g/l et connue sous l'appellation BASE A 250 et contenant 72% en poids d'éthéphon,
- un alkylglucoside connu sous la marque TRITON BG 10 et dont la fonction est de conférer à la bouillie d'application une certaine aptitude à s'étaler sur les végétaux traités.

Les trois compositions ainsi préparées sont identifiées respectivement par LAB 695, LAB 696 et LAB 697.

Les proportions de leurs différents constituants et leurs propriétés apparaissent dans le tableau I qui suit.

**TABLEAU I**

| Désignation composition | Nature des constituants | Poids (g/100 ml) des constituants (teneur % poids) | Teneur (g/l) | Remarques |
|---|---|---|---|---|
| Lab 695 | Base A 250 | 14,0 (72%) | 100 | densité = 1,076 mousse facilement abattue avec des traces de silicone |
| | BAYHIBIT AM | 14,0 (50%) | 70 | |
| | Triton BG 10 | 1,0 | | |
| | Eau | qsp 100 ml (107,6 g) | | |
| Lab 696 | Base A 250 | 14,0 (72%) | 100 | densité = 1,080 mousse facilement abattue avec des traces de silicone |
| | DEQUEST 2000 | 14,0 (50%) | 70 | |
| | Triton BG 10 | 1,0 | | |
| | Eau | qsp 100 ml (108,0 g) | | |
| Lab 697 | Base A 250 | 14,0 (72%) | 100 | densité = 1,084 mousse facilement abattue avec des traces de silicone |
| | DEQUEST 2060 | 14,0 (50%) | 70 | |
| | Triton BG 10 | 1,0 | | |
| | Eau | qsp 100 ml (108,4 g) | | |

### 2. Essais biologiques en serre

Des essais biologiques en serre ont été effectués avec les trois compositions identifiées à l'exemple 1. A titre de comparaison, on a utilisé dans ces essais une solution d'éthéphon standard contenant 480 g/l d'éthéphon, commercialisée sous la marque ETHREL 48® et qui est désignée dans ce qui suit par CA 152.

Dans ces essais, on évalue l'activité éthylénique des trois compositions étudiées, à l'aide du test spécifique développé sur le haricot et désigné dans ce qui suit par "Test haricot".

Dans ce test, un lot de plants de haricot est traité par la composition à étudier au stade 2ème feuille trifoliée à demi-étalée.

Quatre heures après le traitement:
- les plantes sont étêtées au-dessus de la première feuille trifoliée afin de limiter la croissance des plantes; la première feuille trifoliée conservée sert à la fourniture en photosynthétats;
- les limbes des feuilles primaires sont supprimés: on les sectionne à leur base, laissant uniquement le pétiole sur la plante.

Un lot de plantes témoin non traitées est préparé de la même manière.

On dénombre ensuite, à intervalles d'un jour, les pétioles qui tombent et on établit ainsi la cinétique d'abscission induite par chaque produit.

L'absence de chute de pétioles sur les plantes témoin permet de vérifier que les différences de cinétiques d'abscission observées entre lots traités reflètent bien des différences d'activité entre produits appliqués.

Les plantes (haricot variété Cabri) sont cultivées en pots sous serre à une température minimale de 13°C; le cycle jour/nuit est de 16/8 heures et l'humidité relative d'environ 70%. Le compost est composé d'un tiers de sable, d'un tiers de tourbe et d'un tiers de terreau.

Les produits sont pulvérisés à la rampe (sous une pression de 1,5.10⁵ Pa); le volume de bouillie est de 1000 1/ha. La dose d'éthéphon étudiée est, selon les essais, de 750 ou de 1000 g par hectare.

Pour chaque composition étudiée, on traite un lot de 20 plantes.

Toutes les notations sont réalisées en "aveugle".

L'activité d'un régulateur de croissance est susceptible de varier en fonction des conditions de culture. Aussi, les expériences sont répétées plusieurs fois au cours du temps pour en valider les résultats.

### a) Série d'essais 1 et 2

Dans ces essais 1 et 2, on a comparé l'activité éthylénique des compositions LAB 695, LAB 696 et LAB 697 à celle du standard CA 152. La dose d'éthéphon étudiée est de 1000 g par hectare.

L'essai 1 a été effectué en décembre 1993 et l'essai 2 en février 1994.

Les résultats de l'essai 1 sont réunis dans le tableau II.

**TABLEAU II**

| Produits | Dose (g d'éthéphon / ha) | Moment de l'observation (en jours) après le traitement T | | | | | | | | |
|---|---|---|---|---|---|---|---|---|---|---|
| | | T+2j | T+3j | T+4j | T+5j | T+6j | T+7j | T+8j | T+9j | T+10j |
| | | % de pétioles tombés | | | | | | | | |
| Témoin | | 0 | 0 | 0 | 0 | 0 | 0 | 0 | 0 | 0 |
| CA152 | 1000 | 0 | 0 | 30 | 63 | 83 | 91 | 100 | | |
| LAB695 | 1000 | 0 | 0 | 50 | 76 | 91 | 96 | 98 | 100 | |
| LAB696 | 1000 | 0 | 4 | 46 | 80 | 91 | 100 | | | |
| LAB697 | 1000 | 0 | 11 | 59 | 89 | 100 | | | | |

Dans le cas du "Témoin", on a appliqué de l'eau sans matière active.

Les résultats de l'essai 2 sont réunis dans le tableau III.

**TABLEAU III**

| Produits | Dose (g d'éthéphon./ ha) | Moment de l'observation (en jours) après le traitement T | | | | | | | | |
|---|---|---|---|---|---|---|---|---|---|---|
| | | T+2j | T+3j | T+4j | T+5j | T+6j | T+7j | T+8j | T+9j | T+10j |
| | | % de pétioles tombés | | | | | | | | |
| Témoin | | 0 | 0 | 0 | 0 | 0 | 0 | 0 | 0 | 0 |
| CA152 | 1000 | 0 | 0 | 0 | 0 | 12 | 41 | 62 | 65 | 82 |
| LAB695 | 1000 | 0 | 0 | 0 | 9 | 24 | 68 | 79 | 88 | 94 |
| LAB696 | 1000 | 0 | 0 | 0 | 18 | 35 | 76 | 97 | 100 | |
| LAB697 | 1000 | 0 | 0 | 0 | 15 | 56 | 91 | 94 | 97 | 100 |

A l'examen des résultats réunis dans les tableaux I et II, on constate que
■ les cinétiques d'abscission diffèrent d'un produit à l'autre; l'absence de chute de pétioles sur les lots de plantes témoin démontre que les différences observées sont bien inhérentes à des différences d'activité entre produits;
■ les compositions conformes à l'invention se distinguent nettement du standard par les points suivants:
   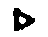 la chute des pétioles démarre plus précocement après application,
   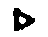 une fois démarrée, le nombre de pétioles qui tombent par unité de temps est plus important; ainsi, à une date d'observation donnée après démarrage de l'abscission, le niveau d'efficacité atteint est nettement supérieur (au troisième jour à partir du démarrage, il est de l'ordre de +20 à +30% dans le premier essai et de l'ordre de +30 à +50% dans le second).

Ces résultats montrent que l'activité éthylénique des compositions à base d'éthéphon conformes à l'invention se manifeste beaucoup plus rapidement que celle du standard et que le niveau d'efficacité auquel ils parviennent est généralement supérieur.

### b) Série d'essais 3 à 6

Cette série de quatre essais a été menée en utilisant la composition LAB 697; elle avait pour but de conforter les résultats de la première série.

Les essais 3 à 6 ont été effectués respectivement
- en octobre 1994, pour les essais 3 et 4,
- en juin 1994, pour l'essai 5 et
- en mai 1994, pour l'essai 6.

Dans les essais 3 et 4, la dose étudiée était de 750 g d'éthéphon/ha.

Dans les essais 5 et 6, elle était de 1000 g d'éthéphon/ha.

Les résultats des essais 3 à 6 sont présentés respectivement dans les tableaux IV à VII.

**TABLEAU IV**

| Produits | Dose (g d'éthéphon/ha) | Moment de l'observation (en jours) après le traitement T | | | | | | | | |
|---|---|---|---|---|---|---|---|---|---|---|
| | | T+2j | T+3j | T+4j | T+5j | T+6j | T+7j | T+8j | T+9j | T+10j |
| | | % de pétioles tombés | | | | | | | | |
| Témoin | | 0 | 0 | 0 | 0 | 0 | 0 | 0 | 0 | 0 |
| CA152 | 750 | 0 | 0 | 2 | 23 | 67 | 90 | 96 | 98 | 100 |
| LAB697 | 750 | 0 | 0 | 15 | 54 | 87 | 94 | 96 | 98 | 100 |

**TABLEAU V**

| Produits | Dose (g éthéphon/ ha) | Moment de l'observation (en jours) après le traitement T | | | | | | | | |
|---|---|---|---|---|---|---|---|---|---|---|
| | | T+2j | T+3j | T+4j | T+5j | T+6j | T+7j | T+8j | T+9j | T+10j |
| | | % de pétioles tombés | | | | | | | | |
| Témoin | | 0 | 0 | 0 | 0 | 0 | 0 | 0 | 0 | 0 |
| CA152 | 750 | 0 | 0 | 2 | 54 | 78 | 91 | 96 | 100 | |
| LAB697 | 750 | 0 | 4 | 28 | 83 | 98 | 100 | | | |

**TABLEAU VI**

| Produits | Dose (g d'éthéphon/ ha) | Moment de l'observation (en jours) après le traitement T | | | | | | | | |
|---|---|---|---|---|---|---|---|---|---|---|
| | | T+2j | T+3j | T+4j | T+5j | T+6j | T+7j | T+8j | T+9j | T+10j |
| | | % de pétioles tombés | | | | | | | | |
| Témoin | | 0 | 0 | 0 | 0 | 0 | 0 | 0 | 0 | 0 |
| CA152 | 1000 | 0 | 16 | 87 | 97 | 97 | 100 | | | |
| LAB697 | 1000 | 3 | 67 | 100 | | | | | | |

**TABLEAU VII**

| Produits | Dose (g d'éthéphon/ ha) | Moment de l'observation (en jours) après le traitement T | | | | | | | | |
|---|---|---|---|---|---|---|---|---|---|---|
| | | T+2j | T+3j | T+4j | T+5j | T+6j | T+7j | T+8j | T+9j | T+10j |
| | | % de pétioles tombés | | | | | | | | |
| Témoin | | 0 | 0 | 0 | 0 | 0 | 0 | 0 | 0 | 0 |
| CA152 | 1000 | 0 | 0 | 0 | 0 | 11 | 31 | 47 | 56 | 64 |
| LAB697 | 1000 | 0 | 3 | 33 | 67 | 72 | 92 | 97 | 97 | 97 |

L'examen des résultats réunis dans les tableaux IV à VII permet d'aboutir aux conclusions suivantes.

Ces résultats:
■ confirment que l'utilisation concomitante des adjuvants et de l'éthéphon permet une réponse plus rapide et plus intense des plantes que l'éthéphon seul,
■ suggèrent une moins grande sensibilité des spécialités proposées aux conditions de culture; en effet, alors que le standard n'aboutit pas au résultat escompté dans l'essai 6, l'utilisation des produits selon l'invention permet de parvenir à un niveau d'efficacité très satisfaisant.

### 3. Essais biologiques en plein champ

On a étudié l'efficacité des "adjuvants" utilisés concomitamment à l'éthéphon dans l'application à la défoliation du coton (variété Stoneville) cultivé en plein champ en parcelles d'agriculteur.

L'étude est illustrée par les essais 7 et 8. Leur localisation et leurs caractéristiques sont précisées dans le tableau VIII.

**TABLEAU VIII**

| Essais | 7 | 8 |
|---|---|---|
| Localisation | Coria del Rio Seville, Espagne | Torre de la reina Seville, Espagne |
| Date de traitement | 19/09/94 | 13/10/94 |
| T° max | 27°C | 31°C |
| T° min | 19°C | 22°C |
| Volume de bouillie | 500 l/ha | 500 l/ha |

Remarque: La bouillie contenait 2,4 g de matière active/litre.

Les essais sont réalisés selon un dispositif en blocs à 3 répétitions avec témoin inclus. Les parcelles élémentaires sont de 32m² (4 rangs sur 8 m de long).

La composition LAB 697 a été étudiée comparativement au standard (Ethrel® 48 ou CA 152). Chaque produit est appliqué à la dose de 1200 g d'éthéphon/ha.

Le pourcentage visuel de défoliation du coton est évalué lors de la mise en place des essais puis après traitement régulièrement tous les 3 jours.

Les résultats des essais 7 et 8 sont réunis respectivement dans les tableaux IX et X ci-après.

**TABLEAU IX**

| (les résultats sont la moyenne de trois répétitions) | | | | | |
|---|---|---|---|---|---|
| Produits | Dose (g d'éthéphon/ ha) | T | Moment de l'observation (en jours) après le traitement T | | |
| | | | T+3j | T+6j | T+9j |
| | | % de défoliation | | | |
| Témoin | | 6,2 | 16,7 | 52,5 | 57,5 |
| CA152 | 1200 | 7,5 | 27,5 | 65,8 | 78,3 |
| LAB697 | 1200 | 6,7 | 33,3 | 76,7 | 85 |

**TABLEAU X**

| (les résultats sont la moyenne de trois répétitions) | | | | | |
|---|---|---|---|---|---|
| Produits | Dose (g d'éthéphon/ ha) | T | Moment de l'observation (en jours) après le traitement T | | |
| | | | T+3j | T+6j | T+9j |
| | | % de défoliation | | | |
| Témoin | | | 5 | 7,5 | 45 |
| CA152 | 1200 | | 7,5 | 21,7 | 69,2 |
| LAB697 | 1200 | | 7,5 | 26,7 | 80,8 |

L'examen des résultats réunis dans les tableaux IX et X permet de constater que, si l'éthéphon seul accentue la défoliation du coton par rapport au témoin non traité, l'utilisation concomitante des "adjuvants" ou produits mis en oeuvre conformément à l'invention permet d'obtenir une activité nettement plus marquée.

Plus généralement, les observations réalisées tant en serre qu'en plein champ permettent de constater l'intérêt des procédé et compositions conformes à l'invention de trois points de vue:
a) la matière active est mieux valorisée et
   - on peut, pour une même quantité d'éthéphon, obtenir un meilleur niveau d'efficacité,
   - on peut, pour un effet escompté donné, réduire la quantité d'éthéphon appliquée, d'où un coût d'utilisation moindre et un meilleur respect de l'environnement,
b) la réduction du délai entre le traitement et la réponse permet de prendre la décision d'appliquer le produit à plus brève échéance, ce qui augmente la souplesse d'utilisation,
c) la moins grande sensibilité constatée du produit à l'égard des conditions climatiques élargit le calendrier d'utilisation du produit.

## Revendications

1. Procédé de régulation de la croissance des végétaux caractérisé par le fait que l'on met en oeuvre sur les végétaux à traiter de l'éthéphon et au moins un produit dont la structure chimique est caractérisée par le fait qu'elle comprend au moins deux fonctions acides choisies dans le groupe comprenant les fonctions acides du type carboxylique de formule (-COOH) et celles du type phosphonique (-PO₃H₂), l'une au moins de ces fonctions acides étant la fonction (-PO₃H₂), ledit produit étant choisi dans le groupe comprenant
- celui de formule: 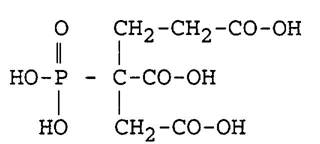
- et ceux dans lesquels les fonctions acides sont reliées
• par une chaîne organique du type (-R-O-R) comportant une fonction éther et dans laquelle R est défini comme ci-dessus, les deux chaînes R pouvant être identiques ou différentes l'une de l'autre,
• et/ou par une chaîne organique du type (-R-NH-R-) comportant une fonction amine secondaire et dans laquelle R est défini comme ci-dessus, les deux chaînes R pouvant être identiques ou différentes l'une de l'autre,
• et/ou par une chaîne organique du type 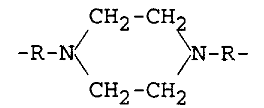 comportant deux fonctions amine tertiaire et dans laquelle R est défini comme ci-dessus, les deux chaînes R pouvant être identiques ou différentes l'une de l'autre,
• et/ou par une chaîne du type 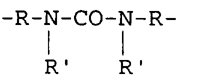 dans laquelle (-R') représente l'hydrogène ou la susdite chaîne R,
• et/ou par une chaîne organique du type 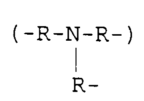
comportant une fonction amine tertiaire et dans laquelle R est défini comme ci-dessus, les trois chaînes R pouvant être identiques ou différentes l'une de l'autre.

2. Composition à base d'éthéphon pour la régulation de la croissance des végétaux, caractérisée par le fait qu'elle comprend, outre l'éthéphon et, s'il y a lieu, les constituants habituels des compositions à base d'éthéphon, au moins un produit ou adjuvant dont la structure chimique comprend au moins deux fonctions acides choisies dans le groupe comprenant les fonctions acides du type carboxylique de formule (-COOH) et celles du type phosphonique (-PO₃H₂), l'une au moins de ces fonctions étant la fonction (-PO₃H₂), ledit produit étant choisi dans le groupe comprenant
- celui de formule 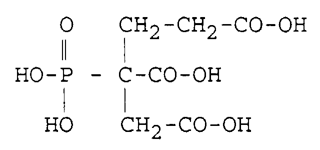
- et ceux dans lesquels les fonctions acides sont reliées
• par une chaîne organique du type (-R-O-R) comportant une fonction éther et dans laquelle R est défini comme ci-dessus, les deux chaînes R pouvant être identiques ou différentes l'une de l'autre,
• et/ou par une chaîne organique du type (-R-NH-R-) comportant une fonction amine secondaire et dans laquelle R est défini comme ci-dessus, les deux chaînes R pouvant être identiques ou différentes l'une de l'autre,
• et/ou par une chaîne organique du type 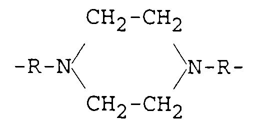 comportant deux fonctions amine tertiaire et dans laquelle R est défini comme ci-dessus, les deux chaînes R pouvant être identiques ou différentes l'une de l'autre,
• et/ou par une chaîne du type 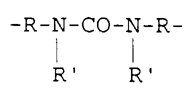 dans laquelle (-R') représente l'hydrogène ou la susdite chaîne R,
• et/ou par une chaîne organique du type 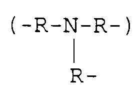
comportant une fonction amine tertiaire et dans laquelle R est défini comme ci-dessus, les trois chaînes R pouvant être identiques ou différentes l'une de l'autre.

3. Composition selon la revendication 2, caractérisée par le fait que la structure chimique du produit ou adjuvant qui comprend au moins deux fonctions acides, est représentée par l'une des formules générales indiquées ci-après: 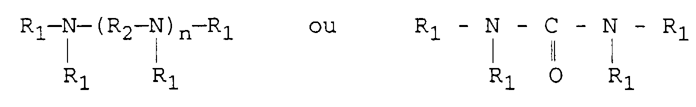 ou 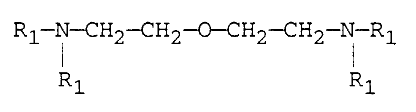 dans lesquelles
- n représente un nombre entier de 0 à 4,
- R₂ représente un groupe hydrocarboné linéaire ou ramifié ayant de 2 à 6 atomes de carbone,
- R₁ représente, indépendamment à chaque occurrence, un atome d'hydrogène, une chaîne alcoyle ayant de 1 à 4 atomes de carbone, un groupe phényle, un groupe hydroxyphényle, un groupe hydroxy-alcoyle, un groupe acide alcoylène-phosphonique ou un des cinq groupes représentés ci-après:
-CH₂-CH₂-NH-PO₃H₂ 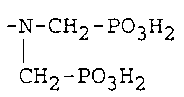
-CH₂-COOH
(le nombre de groupes -CH₂-COOH étant d'au plus trois)

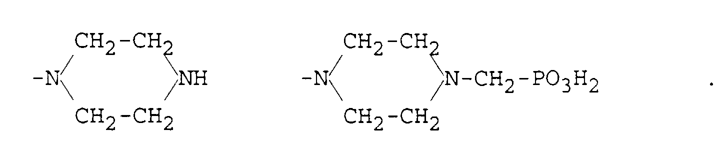

4. Composition selon la revendication 2, caractérisée par le fait que la structure chimique du produit ou adjuvant qui comprend au moins deux fonctions acides, est représentée par la formule 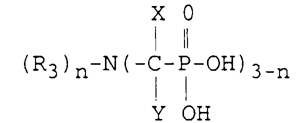 dans laquelle
- n représente un nombre entier égal à 0 ou 1,
- X et Y représentent un atome d'hydrogène ou un reste alcoyle ayant de 1 à 6 atomes de carbone,
- R₃ représente un atome d'hydrogène, un groupe hydrocarboné aliphatique, un groupe hydrocarboné aliphatique halo-substitué, un groupe hydrocarboné aliphatique hydroxy-substitué, le groupement -CH₂COOH ou le groupe 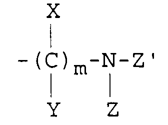
dans laquelle
- m représente un nombre entier de 1 à 6,
- X et Y représentent un atome d'hydrogène ou un reste alcoyle,
- Z représente un atome d'hydrogène ou le groupe 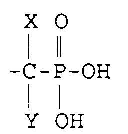
- Z' représente Z ou le groupe de formule 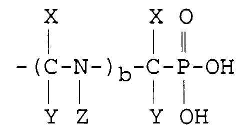
dans laquelle b est un nombre entier de 1 à 6.

5. Composition selon la revendication 2, caractérisée par le fait que la structure chimique du produit ou adjuvant qui comprend au moins deux fonctions acides, est représentée par la formule 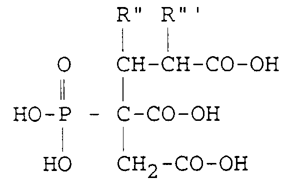 dans laquelle
- R" représente l'hydrogène ou une chaîne alkyle courte ayant de 1 à 4 atomes de carbone et
- R"' représente l'hydrogène ou un groupe méthyle, les produits répondant aux formules 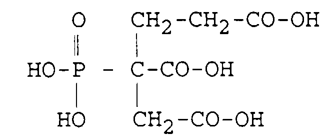
ainsi que 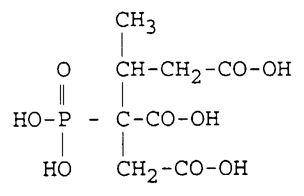 et 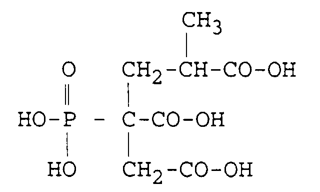 étant plus particulièrement préférés.

6. Composition selon la revendication 2, caractérisée par le fait que la structure chimique du produit ou adjuvant qui comprend au moins deux fonctions acides, est soit représentée par la formule 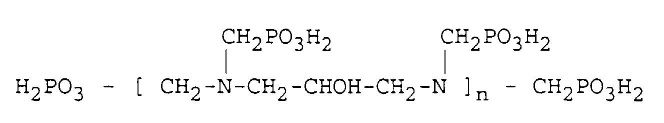 dans laquelle n est un nombre entier de 1 à 5,
soit par les produits suivants:
- l'acide 1,6-hexylènediamine-N,N,N',N'-tétrakis((méthylène)phosphonique),
- l'acide éthèylènediamine-N,N,N',N'-tétrakis((méthylène)phosphonique),
- l'acide diéthylènetriamine-N,N,N',N",N"-penta((méthylène)phosphonique),
- l'acide nitrilo-N,N,N-tris((méthylène)phosphonique) qui sont particulièrement préférés.

7. Composition selon la revendication 2, caractérisée par le fait que la structure chimique du produit ou adjuvant qui comprend au moins deux fonctions acides, est représentée par l'une des formules 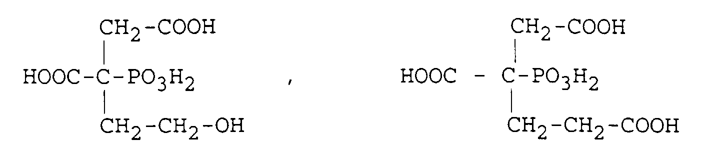 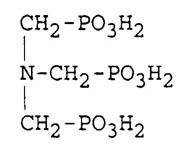 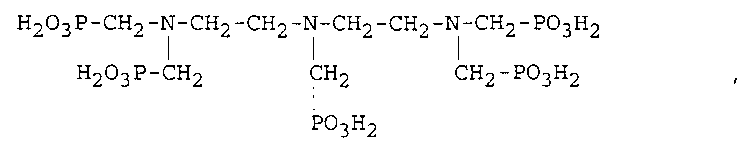 et

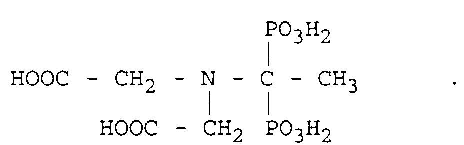

8. Composition selon l'une des revendications 2 à 7, caractérisée par le fait que le rapport pondéral éthéphon/adjuvant est de 10/1 à 1/10, de préférence de 5/1 à 1/5.

9. Procédé selon la revendication 1, caractérisé par le fait que l'on applique à l'hectare de 20 g à 3000 g d'éthéphon et de 20 g à 5000 g d'un ou plusieurs adjuvants selon l'une des revendications 2 à 7.

10. Procédé pour la régularisation de la croissance des végétaux caractérisé par le fait que l'on applique aux plantes à traiter une quantité efficace, selon la culture, le stade physiologique et l'effet recherché, de préférence de 20 à 3000 g d'éthéphon et de préférence de 20 à 5000 g d'un ou plusieurs adjuvants selon l'une des revendications 2 à 7.

11. Procédé selon la revendication 10, caractérisé par le fait que la composition est appliquée de préférence sous forme de bouillie contenant de 20 g à 3000 g d'éthéphon et de 20 g à 5000 g d'adjuvant selon l'une des revendications 2 à 8, l'ensemble étant dissous dans 20 à 3000 litres d'eau.

## Patentansprüche

1. Verfahren zur Regulierung des Wachstums von Pflanzen, dadurch **gekennzeichnet**, daß man an den zu behandelnden Pflanzen Ethephon und mindestens ein Produkt, dessen chemische Struktur dadurch gekennzeichnet ist, daß sie mindestens zwei Säurefunktionen, ausgewählt aus der Gruppe, umfassend Säurefunktionen des Carbonsäuretyps der Formel (-COOH) und denjenigen des Phosphonsäuretyps (-PO₃H₂), umfaßt, einsetzt, wobei mindestens einer dieser Säurefunktionen die Funktion (-PO₃H₂) ist, wobei das Produkt aus der Gruppe, umfassend
- die Verbindung der Formel: 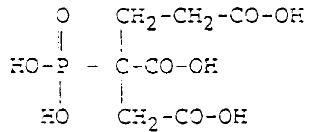
- und diejenigen, deren Säurefunktionen verknüpft sind
. durch eine organische Kette des Typs (-R-O-R), die eine Etherfunktion umfaßt und worin R wie vorstehend definiert ist, wobei die beiden Ketten R gleich oder voneinander verschieden sein können,
. und/oder durch eine organische Kette des Typs (-R-NH-R-), die eine sekundäre Aminfunktion umfaßt und worin R wie vorstehend definiert ist, wobei die zwei Ketten R gleich oder voneinander verschieden sein können,
. und/oder durch eine organische Kette des Typs 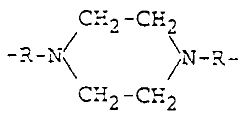
die zwei tertiäre Aminfunktionen umfaßt und worin R wie vorstehend definiert ist, wobei die zwei Ketten R gleich oder voneinander verschieden sein können,
. und/oder durch eine Kette des Typs 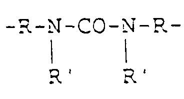 worin (-R') Wasserstoff oder die vorstehende Kette R bezeichnet,
. und/oder durch eine organische Kette des Typs 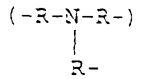 die eine tertiäre Aminfunktion umfaßt
und worin R wie vorstehend definiert ist, wobei die drei Ketten R gleich oder voneinander verschieden sein können, ausgewählt ist.

2. Zusammensetzung auf der Basis von Ethephon zur Regulierung des Wachstums von Pflanzen, dadurch gekennzeichnet, daß sie neben Ethephon und, sofern vorhanden, den üblichen Bestandteilen der Zusammensetzungen auf der Basis von Ethephon, mindestens ein Produkt oder Adjuvans, dessen chemische Struktur mindestens zwei Säurefunktionen, ausgewählt aus der Gruppe, umfassend die Säurefunktionen des Carbonsäuretyps der Formel (-COOH) und diejenigen des Phosphonsäuretyps (-PO₃H₂), umfaßt, enthält, wobei mindestens eine dieser Funktionen die Funktion (-PO₃H₂) ist, wobei das Produkt aus der Gruppe, umfassend
- die Verbindung der Formel: 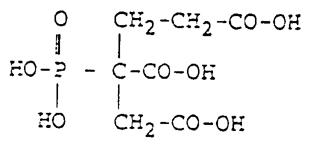
- und diejenigen, deren Säurefunktionen verknüpft sind
. durch eine organische Kette des Typs (-R-O-R), die eine Etherfunktion umfaßt und worin R wie vorstehend definiert ist, wobei die beiden Ketten R gleich oder voneinander verschieden sein können,
. und/oder durch eine organische Kette des Typs (-R-NH-R-), die eine sekundäre Aminfunktion umfaßt und worin R wie vorstehend definiert ist, wobei die zwei Ketten R gleich oder voneinander verschieden sein können,
. und/oder durch eine organische Kette des Typs 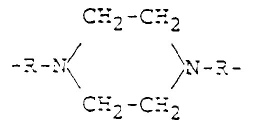 die zwei tertiäre Aminfunktionen umfaßt und worin R wie vorstehend definiert ist, wobei die zwei Ketten R gleich oder voneinander verschieden sein können,
. und/oder durch eine Kette des Typs 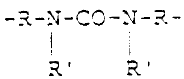
worin (-R') Wasserstoff oder die vorstehende Kette R bezeichnet,
. und/oder durch eine organische Kette des Typs 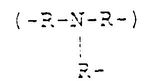 die eine tertiäre Aminfunktion umfaßt
und worin R wie vorstehend definiert ist, wobei die drei Ketten R gleich oder voneinander verschieden sein können,
ausgewählt ist.

3. Zusammensetzung nach Anspruch 2, dadurch **gekennzeichnet**, daß die chemische Struktur des Produkts oder Adjuvans, die mindestens zwei Säurefunktionen umfaßt, durch eine der nachstehend angegebenen allgemeinen Formeln dargestellt wird: 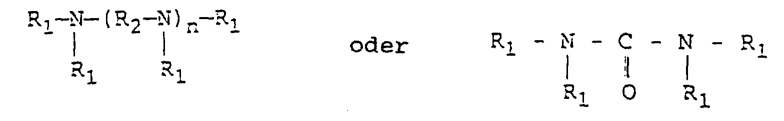 oder 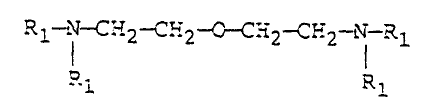 worin
- n eine ganze Zahl von 0 bis 4 bezeichnet,
- R₂ eine lineare oder verzweigte Kohlenwasserstoffgruppe mit 2 bis 6 Kohlenstoffatomen bezeichnet,
- R₁ unabhängig von jedem Vorkommen ein Wasserstoffatom, eine Alkylkette mit 1 bis 4 Kohlenstoffatomen, eine Phenylgruppe, eine Hydroxyphenylgruppe, eine Hydroxyalkylgruppe, eine Alkylenphosphonsäuregruppe oder eine der fünf nachstehend dargstellten Gruppen:
-CH₂-CH₂-NH-PO₃H₂ 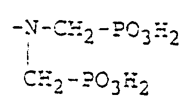
- CH₂-COOH
(die Anzahl der Gruppen -CH₂-COOH beträgt höchstens drei) 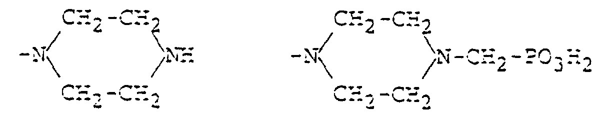 bezeichnet.

4. Zusammensetzung nach Anspruch 2, dadurch **gekennzeichnet**, daß die chemische Struktur des Produkts oder des Adjuvans, die mindestens zwei Säurefunktionen umfaßt, durch die Formel 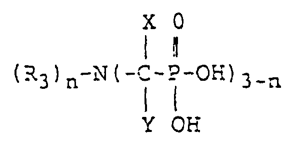 wiedergegeben ist, worin
- n eine ganze Zahl von 0 oder 1 bezeichnet,
- X und Y ein Wasserstoffatom oder einen Alkylrest mit 1 bis 6 Kohlenstoffatomen bezeichnen,
- R₃ ein Wasserstoffatom, eine aliphatische Kohlenwasserstoffgruppe, eine aliphatische halogensubstituierte Kohlenwasserstoffgruppe, eine aliphatische hydroxy-substituierte Kohlenwasserstoffgruppe, die Gruppierung-CH₂COOH oder die Gruppe 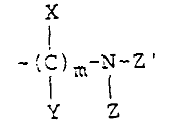 worin
- m eine ganze Zahl von 1 bis 6 bezeichnet,
- X und Y ein Wasserstoffatom oder einen Alkylrest bezeichnen,
- Z ein Wasserstoffatom oder die Gruppe bezeichnet, 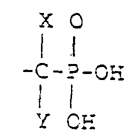
- Z' Z oder die Gruppe der Formel 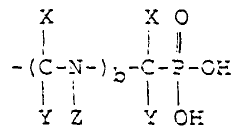
bezeichnet, worin b eine ganze Zahl von 1 bis 6 ist,
bezeichnet.

5. Zusammensetzung nach Anspruch 2, dadurch **gekennzeichnet**, daß die chemische Struktur des Produkts oder des Adjuvans, die mindestens zwei Säurefunktionen umfaßt, durch die Formel 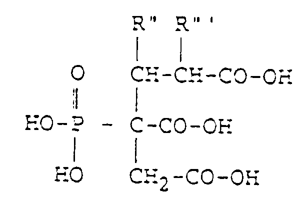 wiedergegeben ist, worin
- R" Wasserstoff oder eine kurze Alkylkette mit 1 bis 4 Kohlenstoffatomen bezeichnet, und
- R''' Wasserstoff oder eine Methylgruppe bezeichnet, wobei die Verbindungen der Formeln 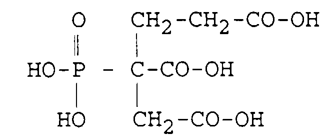
sowie 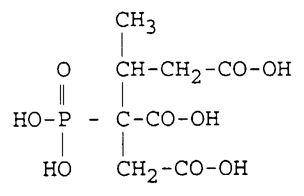 und 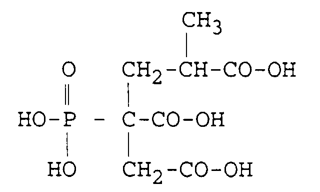 ganz besonders bevorzugt sind.

6. Zusammensetzung nach Anspruch 2, dadurch **gekennzeichnet**, daß die chemische Struktur des Produkts oder Adjuvans, die mindestens zwei Säurefunktionen umfaßt, entweder durch die Formel 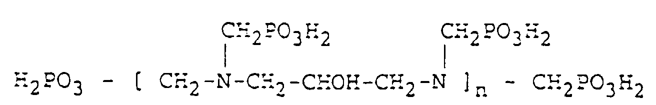 worin n eine ganze Zahl von 1 bis 5 ist, oder durch die folgenden Verbindungen:
- 1,6-Hexylendiamin-N,N,N',N'-tetrakis((methylen)phosphonsäure),
- Ethylendiamin-N,N,N',N'-tetrakis((methylen)phosphonsäure),
- Diethylentriamin-N,N,N",N",N"-penta((methylen)phosphonsäure),
- Nitrilo-N,N,N-tris((methylen)phosphonsäure),
die besonders bevorzugt sind, wiedergegeben ist.

7. Zusammensetzung nach Anspruch 2, dadurch **gekennzeichnet**, daß die chemische Struktur des Produkts oder Adjuvans, die mindestens zwei Säurefunktionen umfaßt, durch eine der Formeln 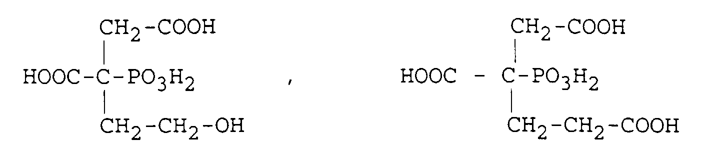 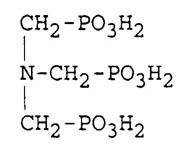 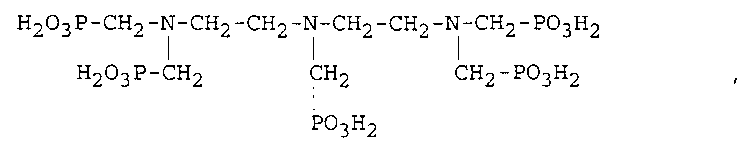 und 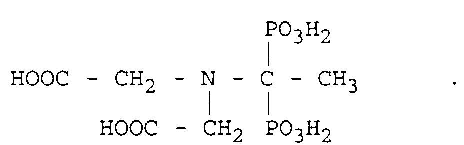 wiedergegeben ist.

8. Zusammensetzung nach einem der Ansprüche 2 bis 7, dadurch **gekennzeichnet**, daß das Gewichtsverhältnis Ethephon/Adjuvans 10/1 bis 1/10, bevorzugt 5/1 bis 1/5 beträgt.

9. Verfahren nach Anspruch 1, dadurch gekennzeichnet , daß man auf einen Hektar 20 g bis 3000 g Ethephon und 20 g bis 5000 g eines oder mehrerer Adjuvantien nach einem der Ansprüche 2 bis 7 aufbringt.

10. Verfahren zur Regulierung des Wachstums von Pflanzen, dadurch **gekennzeichnet**, daß man auf die zu behandelnden Pflanzen eine wirksame Menge gemäß Kultur, physiologischem Stadium und gewünschter Wirkung, bevorzugt 20 bis 3000 g Ethephon und bevorzugt 20 bis 5000 g eines oder mehrerer Adjuvantien nach einem der Ansprüche 2 bis 7 aufbringt.

11. Verfahren nach Anspruch 10, dadurch **gekennzeichnet**, daß die Zusammensetzung bevorzugt in Form einer Bouillon, die 20 g bis 3000 g Ethephon und 20 g bis 5000 g Adjuvans nach einem der Ansprüche 2 bis 8 enthält, aufgebracht wird, wobei die Gesamtmenge in 20 bis 3000 Liter Wasser aufgelöst ist.

## Claims

1. Plant growth regulation process characterized by the fact that use is made, on the plants to be treated, of ethephon and of at least one product, the chemical structure of which is characterized by the fact that it contains at least two acid functions selected from the group comprising acid functions of carboxylic type of formula (-COOH) and acid functions of phosphonic type of formula (-PO₃H₂), at least one of these acid functions being the (-PO₃H₂) function, said product being selected from the group comprising
- that having the formula: 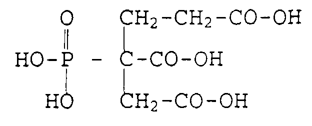
- and those in which the acid functions are connected one to the other,
• by an organic chain of the (-R-O-R) type containing an ether function and wherein R is defined as hereabove, the two chains R being identical or different from each other,
• and/or by an organic chain of the (-R-NH-R-) type containing a secondary amine function and wherein R is defined as hereabove, the two chains R being identical or different from each other,
• and/or by an organic chain of the type 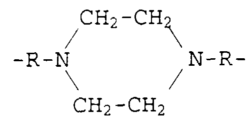
containing two tertiary amine functions and wherein R is defined as hereabove, the two chains R being identical or different from each other,
• and/or by a chain of the 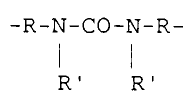 type in which(-R') represents hydrogen or the afore-mentioned chain R,
• and/or by an organic chain of the 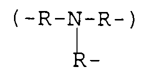 type
containing a tertiary amine function and wherein R is defined as hereabove, the three chains R being identical or different from each other.

2. Ethephon-based composition for the regulation of plant growth, characterized by the fact that it comprises, in addition to ethephon and, if any, the usual constituents of ethephon-based compositions, at least one product or adjuvant, the chemical structure of which contains at least two acid functions selected from the group comprising acid functions of the carboxylic type of formula (-COOH) and acid functions of the phosphonic type of formula (-PO₃H₂), at least one of these acid functions being the (-PO₃H₂) function, said product being selected from the group comprising
- that having the formula 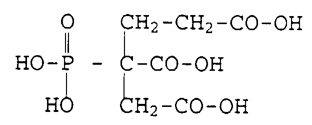
- and those in which the acid functions are connected one to the other,
• by an organic chain of the (-R-O-R) type containing an ether function and wherein R is defined as hereabove, the two chains R being identical or different from each other,
• and/or by an organic chain of the(-R-NH-R-) type containing a secondary amine function and wherein R is defined as hereabove, the two chains R being identical or different from each other,
• and/or by an organic chain of the type 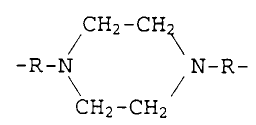
containing two tertiary amine functions and wherein R is defined as hereabove, the two chains R being identical or different from each other,
• and/or by a chain of the 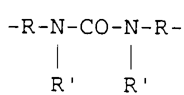 type in which(-R') represents hydrogen or the afore-mentioned chain R,
• and/or by an organic chain of the 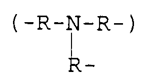 type
containing a tertiary amine function and wherein R is defined as hereabove, the three chains R being identical or different from each other.

3. Composition according to claim 2, characterized by the fact that the chemical structure of the product or adjuvant which contains at least two acid functions, is represented by one of the general formulae indicated below: 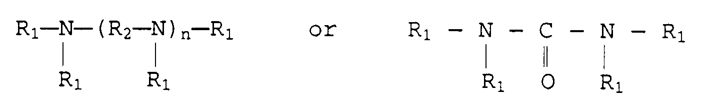 or 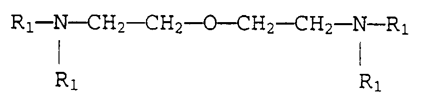 in which
- n represents an integer from 0 to 4,
- R₂ represents a linear or branched hydrocarbon group having 2 to 6 carbon atoms,
- R₁ represents, independently at each occurrence, a hydrogen atom, an alkyl chain having 1 to 4 carbon atoms, a phenyl group, a hydroxyphenyl group, a hydroxyalkyl group, an alkylene-phosphonic acid group or one of the five groups represented below:
-CH₂-CH₂-NH-PO₃H₂ 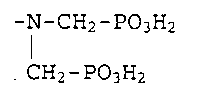
-CH₂-COOH
(the number of -CH₂-COOH groups being at most three)

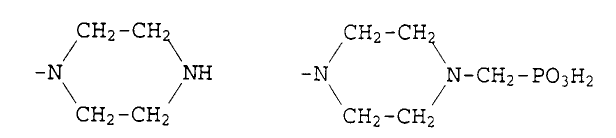

4. Composition according to claim 2, characterized by the fact that the chemical structure of the product or adjuvant, which contains at least two acid functions, is represented by the formula 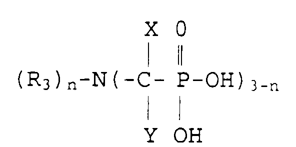 in which
- n represents an integer equal to 0 or 1,
- X and Y represent a hydrogen atom or an alkyl rest having 1 to 6 carbon atoms,
- R₃ represents a hydrogen atom, an aliphatic hydrocarbon group, a halogeno-substituted aliphatic hydrocarbon group, a hydroxy-substituted aliphatic hydrocarbon group, the -CH₂COOH group or the 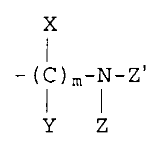 group in which
- m represents an integer from 1 to 6,
- X and Y represent a hydrogen atom or an alkyl rest,
- Z represents a hydrogen atom or the 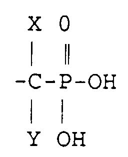 group
- Z' represents Z or the group of formula 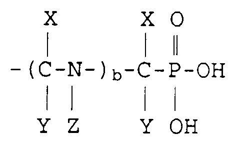
in which b is an integer from 1 to 6.

5. Composition according to claim 2, characterized by the fact that the chemical structure of the product or adjuvant, which contains at least two acid functions, is represented by the formula 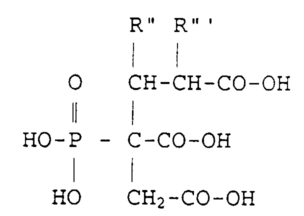 in which
- R" represents hydrogen or a short alkyl chain having 1 to 4 carbon atoms and
- R"' represents hydrogen or a methyl group,
the products corresponding to formulae 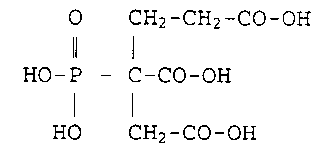 as well as 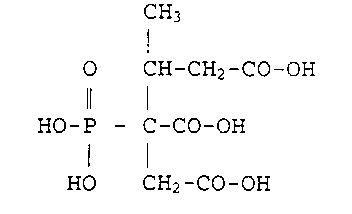 and 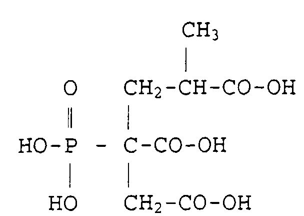 being more particularly preferred.

6. Composition according to claim 2, characterized by the fact that the chemical structure of the product or adjuvant, which contains at least two acid functions, is represented either by the formula 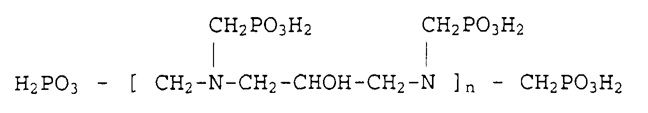 in which n is an integer from 1 to 5,
or by the following products:
- 1,6-hexylenediamine-N,N,N',N'tetrakis((methylene)phosphonic) acid,
- ethylenediamine-N,N,N',N'-tetrakis((methylene)phosphonic) acid,
- diethylenetriamine-N,N,N',N",N"-penta((methylene)phosphonic) acid,
- nitrilo-N,N,N-tris((methylene)-phosphonic) acid which are particularly preferred.

7. Composition according to claim 2, characterized by the fact that the chemical structure of the product or adjuvant, which contains at least two acid functions, is represented by one of the formulae 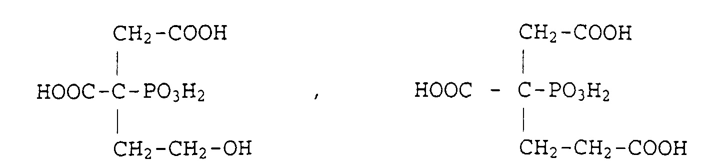 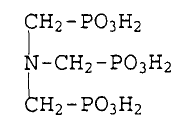 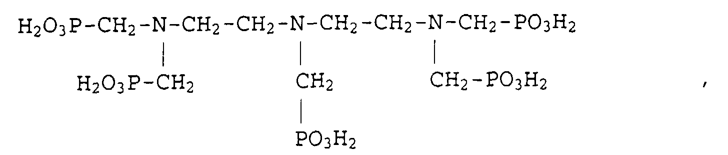 and

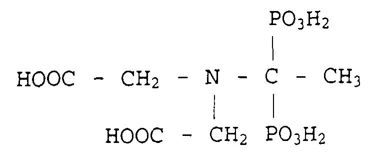

8. Composition according to one of claims 2 to 7, characterized by the fact that the ratio of ethephon/ adjuvant by weight is from 10/1 to 1/10, preferably from 5/1 to 1/5.

9. Process according to claim 1, characterized by the fact that 20 g to 3000 g of ethephon and 20 g to 5000 g of one or more adjuvants according to one of claims 2 to 7 are applied per hectare.

10. Plant growth regulation process characterized by the fact that an effective quantity is applied to the plants to be treated, depending on the culture, the physiological stage and the effect sought, preferably from 20 to 3000 g of ethephon and preferably 20 to 5000 g of one or more adjuvants according to one of claims 2 to 7.

11. Process according to claim 10, characterized by the fact that the composition is preferably applied in the form of a slurry containing 20 g to 3000 g of ethephon and 20 to 5000 g of adjuvant according to one of claims 2 to 8, the whole being dissolved in 20 to 3000 litres of water.
